# EUROPEAN PATENT APPLICATION

(11) **EP 1 879 351 A2**
(43) Date of publication of application: **16.01.2008**
(21) Application number: 07011987.0
(22) Date of filing: 19.06.2007
(51) Int. Cl.: H04L 29/06, H04Q 7/38

(54) **Method and apparatus for data framing in a wireless communications system**

(30) Priority: 21.06.2006 US 805342 P
(71) Applicant: Innovative Sonic Limited, Tortola (VG)
(72) Inventor: Jiang, Sam Shiaw-Shiang, Taipei City (TW); Tseng, Li-Chih, Taipei City (TW)
(74) Representative: Hager, Thomas Johannes

(57) **Abstract**

To conserve radio resources in a wireless communications system through sequence number reuse, a method of performing data framing uses a sequence number in a first protocol entity as a parameter of a security function (302), then reuses the sequence number in a second protocol entity for a predetermined function (304). The second protocol entity is a lower layer of the first protocol entity.

## Description

This application claims the benefit of the filing date of U.S. Provisional Patent Application No. 60/805,342, filed on June 21, 2006, the contents of which are hereby incorporated by reference.

The present invention relates to a method of data framing and related communications device according to the pre-characterizing clause of claim 1.

In a 3^{rd} generation, hereafter 3G, mobile telecommunications system, 3GPP TS 33.102, "3G Security; Security architecture," defines a security architecture for the 3G mobile telecommunications system. User data confidentiality is a security features, and a stream cipher using a derived cipher key is a security mechanism that realizes the user data confidentiality security feature. In the 3G mobile telecommunications system, user plane data are ciphered using a cipher key, and control plane data are ciphered and integrity protected using a cipher key and an integrity key, respectively. Integrity protection, hereafter IP, applied at a radio resource control, hereafter RRC, layer uses an RRC sequence number, hereafter RRC SN. The RRC SN is incremented for every integrity protected RRC message and its length is 4-bits.

In the prior art, the RRC SN and a radio link control SN, hereafter RLC SN, handle IP and ciphering, respectively. A corresponding RLC protocol data unit, hereafter RLC PDU, contains the RRC SN and an RLC SN. This wastes radio resources when transmitting integrity protected RRC messages.

This in mind, the present invention aims at providing a method of data framing and related communications device that conserves radio resources.

This is achieved by a method of data framing and related communications device according to claims 1 and 2. The dependent claims pertain to corresponding further developments and improvements.

As will be seen more clearly from the detailed description following below, the claimed method of data framing and related communications device includes reusing a sequence number in a second protocol entity for a predetermined function.

In the following, the invention is further illustrated by way of example, taking reference to the accompanying drawings. Thereof
Fig. 1 is a function block diagram of a wireless communications device,
Fig. 2 is a diagram of program code of Fig. 1, and
Fig. 3 is a flowchart of a process according to a first embodiment of the present invention.

The third generation, hereafter 3G, mobile telecommunications system has adopted a Wideband Code Division Multiple Access, hereafter WCDMA, wireless air interface access method for a cellular network. WCDMA provides high frequency spectrum utilization, universal coverage, and high quality, high-speed multimedia data transmission.

The WCDMA method also meets all kinds of QoS requirements simultaneously, providing diverse, flexible, two-way transmission services and better communication quality to reduce transmission interruption rates.

Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access, hereafter HSDPA, and High Speed Uplink Package Access, hereafter HSUPA, which are used to increase bandwidth utility rate and package data processing efficiency to improve uplink/downlink transmission rate.

According to Section 6.4.8 of TS 33.102, a mobile equipment, hereafter ME, and a radio network controller, hereafter RNC, initialize 20 most significant bits of an RRC hyper frame number, hereafter HFN, for integrity protection, a radio link control, hereafter RLC, HFN for ciphering, and a dedicated medium access control, hereafter MAC-d, HFN for ciphering to a START value of a corresponding service domain. Remaining bits are initialized to 0. And, the RRC SN for integrity protection and the RLC SN for ciphering are also initialized to 0.
According to Section 6.5.2, IP is applied at the RRC layer.

Regarding an integrity algorithm used for realizing IP, an integrity parameter COUNT-I is 32 bits long. One COUNT-I value is used for each uplink signaling radio bearer, hereafter SRB, i.e. RB 0-4, and one COUNT-I value is used for each downlink SRB. COUNT-I has two parts: a short sequence number (4 bits long), and a long sequence number (28 bits long). The short sequence number is the 4-bit RRC SN available in each RRC PDU, whereas the long sequence number is the 28-bit RRC HFN, which is incremented at each RRC SN cycle.

In 3GPP TS 25.331 V7.0.0, "Radio Resource Control (RRC) (Release 7)," Section 8.5.10 further describes IP. When IP is first activated for an RRC connection, a user equipment, hereafter UE, and a UMTS terrestrial radio access network, hereafter UTRAN, initialize an uplink RRC SN and a downlink RRC SN for all SRBs. The RRC SN is incremented for each integrity protected RRC message.

Finally, unacknowledged mode data, hereafter UMD, PDU headers and acknowledged mode data PDU headers include an RLC SN, which is different from the RRC SN. The RLC SN is used for ciphering, as well as for transmission using a window function. According to Section 9.2.2.3 of 3GPP TS 25.322 V7.0.0, "Radio Link Control (RLC) (Release 7)," the RLC SN for the AMD PDU is 12 bits long, whereas the RLC SN for the UMD PDU is 7 bits long.

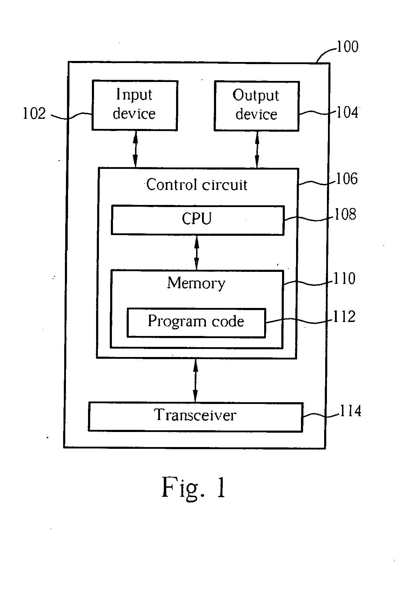

Please refer to Fig. 1, which is a function block diagram of a communications device 100. For the sake of brevity, Fig. 1 only shows an input device 102, an output device 104, a control circuit 106, a central processing unit, hereafter CPU, 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation, hereafter 3G, mobile communications system.

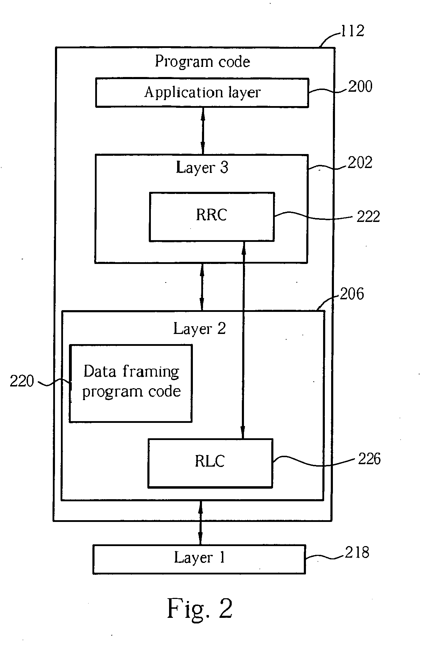

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. An RRC entity 222 is located in the Layer 3 202, and an RLC entity 226 is located in the Layer 2 206. The RRC entity 222 is responsible for, among other things, control of requested QoS, control of ciphering, and RRC message IP. The RLC entity 226 is a lower layer entity to the RRC entity 222.

in acknowledged mode, hereafter AM, the RLC entity 226 is split into a transmitting side and a receiving side. The transmitting side receives RLC SDUs from upper layers through an AM service access point, hereafter AM-SAP. The RLC SDUs are concatenated or segmented to AMD PDUs of a predetermined length. Then, the AMD PDUs are placed in a retransmission buffer and a MUX. The MUX multiplexes AMD PDUs from the retransmission buffer and AMD PDUs that are newly segmented/concatenated. A function then completes a header on the AMD PDUs. Then, the transmission side of the RLC entity 226 sends the AMD PDUs to a lower layer, e.g. a medium access control, hereafter MAC, layer, through a logical channel. To increase efficiency, the program code 112 comprises a data framing program code 220.

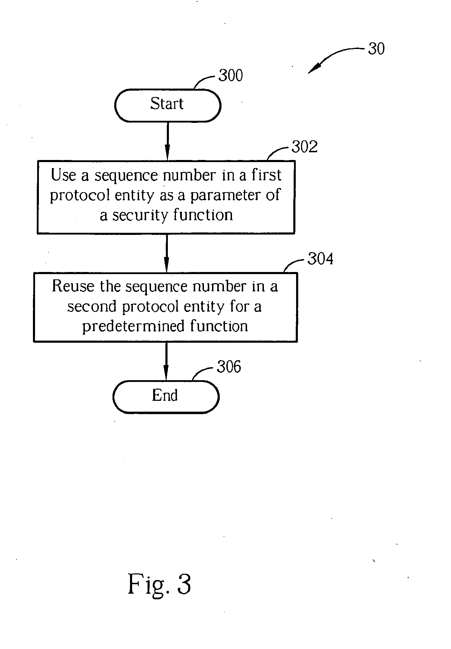

Please refer to Fig. 3, which is a flowchart of a process 30 according to a first embodiment of the present invention. The process 30 is utilized for data framing in the wireless communications system, and can be compiled into the data framing program code 220. The process 30 comprises the following steps:
Step 300: Start.
Step 302: Use a sequence number in a first protocol entity as a parameter of a security function.
Step 304: Reuse the sequence number in a second protocol entity for a predetermined function.
Step 306: End.

In the process 30, the second protocol entity could be the RLC entity 226, the MAC entity, or both. The first protocol entity could be the RRC entity 222. In Step 302, the security function could be ciphering or integrity protection. And, in Step 304, the predetermined function could be automatic retransmission request, hereafter ARQ, hybrid ARQ, hereafter HARQ, ciphering, in-sequence delivery, or duplicate detection. The second protocol entity, i.e. the RLC entity or the MAC entity, could also reuse the sequence number by adding extension bits to the sequence number for concatenation or segmentation. Finally, each PDU of the first protocol entity, i.e. the RRC entity 222, should have one sequence number.

In summary, by reusing the RRC SN in each RRC PDU to perform ARQ, HARQ, ciphering,' in-sequence delivery, and duplicate detection in the RLC entity, the present invention is able to conserve radio resources, and the method is also simpler to implement compared to the prior art.

## Claims

1. A method of performing data framing in a wireless communications system, the method comprising:
using a sequence number in a first protocol entity as a parameter of a security function (302); and
**characterized by**:
reusing the sequence number in a second protocol entity for a predetermined function (304), wherein the second protocol entity is a lower layer of the first protocol entity.

2. A communications device (100) utilized in a wireless communications system for performing data framing, the communications device comprising:
a control circuit (106) for realizing functions of the communications device;
a central processing unit (108) installed in the control circuit for executing program codes to operate the control circuit; and
a memory (110) coupled to the central processing unit and comprising:
program code executed for using a sequence number in a first protocol entity as a parameter of a security function (302); and
**characterized by** the memory further comprising:
program code executed for reusing the sequence number in a second protocol entity for a predetermined function (304), wherein the second protocol entity is a lower layer of the first protocol entity.

3. The method of claim 1 and the communications device of claim 2, **characterized in that** the said second protocol entity can be more than one.

4. The method of claim 1 and the communications device of claim 2, **characterized in that** the second protocol entity reuses the sequence number by adding a plurality of extension bits to the sequence number for segmentation or concatenation.

5. The method of claim 1 and the communications device of claim 2, **characterized in that** each protocol data unit of the first protocol entity has a corresponding sequence number.

6. The method of claim 1 and the communications device of claim 2, **characterized in that** the first protocol entity is a Radio Resource Control entity.

7. The method of claim 1 and the communications device of claim 2, **characterized in that** the second protocol entity is a Radio Link Control entity or a Medium Access Control entity.

8. The method of claim 1 and the communications device of claim 2, **characterized in that** the said security function is ciphering.

9. The method of claim 1 and the communications device of claim 2, **characterized in that** the said security function is integrity protection.

10. The method of claim 1 and the communications device of claim 2, **characterized in that** the predetermined function is Automatic Retransmission Request, Hybrid Automatic Repeat Request, ciphering, in-sequence delivery, or duplicate detection.
